# EUROPÄISCHE PATENTANMELDUNG

(11) **EP 4 418 477 A1**
(43) Veröffentlichungstag der Anmeldung: **21.08.2024**
(21) Anmeldenummer: 23157092.0
(22) Anmeldetag: 16.02.2023
(51) Int. Cl.: H02G 3/18, H02G 3/08

(54) **DICHTUNGSANORDNUNG EINER UNTERFLURKASSETTE**

(71) Anmelder: Tehalit GmbH, 67716 Heltersberg (DE)
(72) Erfinder: SIMON, Yann, 57550 REMERING (FR); LETTERMANN, Gert, 67688 RODENBACH (DE); HENRICH, Jonas, 67655 KAISERSLAUTERN (DE); OMLOR, Marius, 66482 ZWEIBRÜCKEN (DE); GROSSE, Johannes, 67434 NEUSTADT AN DER WEINSTRAßE (DE)
(74) Vertreter: Cabinet Nuss

(57) **Zusammenfassung**

Dichtungsanordnung einer Unterflurkassette, vorzugsweise einer Unterflurkassette für die Aufnahme elektrischer oder elektronischer Einbauten oder Leitungen, wobei die Dichtungsanordnung zwischen einem Deckel und einem kasten- oder topfartigen Gehäuse der Unterflurkassette vorgesehen ist und nach Zusammenfügen von Deckel und Gehäuse an beiden abdichtend anliegt, wobei die Dichtungsanordnung mehrteilig ausgebildet ist und mindestens ein an Deckel und/oder Gehäuse anliegendes starres Trägerelement sowie mindestens ein mit dem Trägerelement verbundenes flexibles Dichtungselement aufweist, wobei das mindestens eine starre Trägerelement so ausgebildet ist, dass sich bei auf dem Gehäuse aufliegenden Deckel im Zusammenwirken von Trägerelement, Deckel und Gehäuse Hohlräume zur Aufnahme des flexiblen Dichtungselements ausbilden und mindestens Teile des flexiblen Dichtungselements durch die Auflage des Deckels auf dem Gehäuse in die Hohlräume einpressbar oder einformbar sind.

## Beschreibung

### FELD DER ERFINDUNG

Die vorliegende Erfindung betrifft eine Dichtungsanordnung einer Unterflurkassette, vorzugsweise einer Unterflurkassette für die Aufnahme elektrischer oder elektronischer Einbauten oder Leitungen im Fußboden, wobei die Dichtungsanordnung zwischen einem Deckel und einem kasten- oder topfartigen Gehäuse bzw. Rahmen der Unterflurkassette vorgesehen ist und nach Zusammenfügen von Deckel und Gehäuse an beiden abdichtend anliegt. Solche Unterflurkassetten bilden oft Knoten- oder Verteilerpunkte für Bodenkanäle und enthalten Unterflurinstallationselemente einer Elektroinstallation. Ebenfalls betrifft die Erfindung eine Unterflurkassette mit einer solchen Dichtungsanordnung.

### HINTERGRUND

Unterflurinstallationen werden in vielen Gebäuden eingesetzt, wenn an den Rändern oder auch in der Mitte von Räumen flexibel Anschlüsse bereitgestellt werden müssen. Unterflurinstallationen umfassen u.a. Bodenkanäle und damit verbundene Unterflurkassetten, in denen die eigentliche elektrische Installation angeordnet ist. Die elektrische Installation kann Anschlusseinrichtungen für Energieversorgungs- oder Datenleitungen umfassen, wobei in diesem Kontext auch optische Datenanschlüsse als Elektroninstallation bezeichnet werden.

In vielen Fällen muss die in Unterflurkassetten angeordnete Elektroinstallation leicht zugänglich sein, um bspw. schnell und einfach elektrische Geräte anschließen und wieder trennen zu können. Dazu sind in der Regel abnehmbare oder schwenkbare Deckel vorgesehen, welche die in der Unterflurkassette angeordnete Elektroinstallation bei geschlossenem Deckel vor Fremdkörpern und Fluiden schützen. Insbesondere bei Böden, die nass gereinigt werden, ist die Fluiddichtheit zwischen Deckel und Gehäuse von großer Bedeutung, um stets eine einwandfreie Funktion der Elektroinstallation zu gewährleisten.

Die hierbei verwendeten Dichtungsanordnungen umfassen in der Regel einen zwischen Deckel und Unterflurkassette umlaufenden Dichtring, welcher bei geschlossenem Deckel die Dichtung sicherstellt. Eine solche Dichtanordnung ist bspw. aus der DE 10 2008 053 779 A1 bekannt. Bei den bekannten Lösungen müssen Deckel und Unterflurkassette ausreichend fest gegeneinander gepresst werden, damit das flexible Material der Dichtung umlaufend überall seine Dichtwirkung entfalten kann. Bei Dichtungen zwischen zwei ineinandergreifenden Teilen müssen alle Abmessungen der Teile und Dichtungen so zueinander bemessen sein, dass die Dichtung ausreichend stark zusammengepresst wird. Bei flächigen Dichtungen muss die Anpresskraft mittels Schrauben, Klemmen oder dergleichen auf den Deckel aufgebracht werden.

Die auf die Dichtung wirkende Anpresskraft soll einerseits an jeder Stelle groß genug sein, um die erforderliche Dichtwirkung sicherzustellen, andererseits soll die Dichtung nicht durch eine zu große Kraft beschädigt werden, bspw. wenn eine Last auf dem Deckel abgestellt wird. Dies kann bei Unterflurkassetten, welche keine umlaufende Auflagefläche für die Dichtungsanordnung aufweisen, bspw. um bei vorgegebenen Außenabmessungen eine möglichst große Öffnung bereitzustellen, oder bei Unterflurkassetten, welche eine runde Öffnung über einem rechteckigen Unterteil aufweisen, zu einem Problem werden.

### BESCHREIBUNG DER ERFINDUNG

Es ist daher eine Aufgabe der vorliegenden Erfindung, eine verbesserte Dichtungsanordnung zu schaffen, welche einen oder mehrere der vorstehend genannten Nachteile beseitigt.

Diese Aufgabe wird durch die in Anspruch 1 angegebene Dichtungsanordnung gelöst. Vorteilhafte Ausgestaltungen und Weiterbildungen sind in den abhängigen Ansprüchen angegeben. Ebenfalls offenbart ist eine Unterflurkassette mit einer solchen Dichtungsanordnung.

Dabei ist die Dichtungsanordnung mehrteilig ausgebildet und weist mindestens ein an Deckel und/oder Gehäuse anliegendes starres Trägerelement sowie mindestens ein mit dem Trägerelement verbundenes flexibles Dichtungselement auf, wobei das mindestens eine starre Trägerelement so ausgebildet ist, dass sich bei aufliegendem Deckel im Zusammenwirken von Trägerelement, Deckel und Gehäuse Hohlräume zur Aufnahme des flexiblen Dichtungselements ausbilden und mindestens Teile des flexiblen Dichtungselements durch die Auflage des Deckels auf der Dichtungsanordnung in die Hohlräume einpressbar oder einformbar sind.

Eine solche mehrteilige, zum Beispiel zweiteilige Ausbildung der Dichtungsanordnung, mit einem starren Trägerelement und einem damit verbundenen flexiblen Dichtungselement, verhindert durch das starre Trägerelement einerseits, dass das flexible Dichtungselement zu stark gepresst oder zusammengedrückt wird und dadurch beschädigt werden könnte. Andererseits werden definierte Hohlräume bereitgestellt, deren Abmessungen so ausgelegt werden können, dass eine sichere und genau bestimmbare Dichtkraft im flexiblen Dichtungselement aufgebaut wird. So kann eine sichere Abdichtung der Unterflurkassette auch bei Nassreinigung des Bodens gewährleistet werden, so dass stets eine einwandfreie Funktion der Elektroinstallation gegeben ist.

Letztlich besteht ein weiterer Vorteil darin, dass weder das kasten- oder topfartige Gehäuse (Box) der Unterflurkassette noch der damit zusammenzufügende Deckel in ihrer Kontur in besonderer Weise zur Aufnahme der Dichtungsanordnung angepasst werden müssen; flach und ohne konkave Formen ausgebildete Anlageflächen an Deckel und Gehäuse, beispielsweise flache, horizontale Anlageflächen, reichen für die erfindungsgemäße Dichtungsanordnung und das Ausbilden von Hohlräumen völlig aus. Somit braucht in der einfachsten Ausführung nur das Trägerelement mit Konturen zur Bildung der Hohlräume ausgebildet werden, was die Herstellung der miteinander zusammenwirkenden Teile erheblich vereinfacht.

Der Deckel kann dabei mithilfe von Führungsmitteln oder durch das Gehäuse selbst geführt auf das Dichtungselement aufgesetzt bzw. im Gehäuse eingesetzt und so auch ohne weitere Verschraubungen oder Befestigungsmittel mit dem Gehäuse zusammengefügt werden. Nachfolgende aufgebrachte Belastungen auf den Deckel, etwa Druckkräfte durch Verkehrslasten, können die erfindungsgemäße Dichtungsanordnung weder beschädigen noch außer Funktion setzen.

In einer Weiterbildung der erfindungsgenäßen Dichtungsanordnung liegt mindestens ein starres Trägerelement in einer Ebene zwischen Deckel und Gehäuse und weist eine umlaufend geschlossene Form auf. Durch die Ausbildung in einer Ebene, nämlich in der sogenannten Dichtebene, ist es gewährleistet, dass die auf die Dichtungsanordnung wirkende Kraft so weit wie möglich auf den gesamten Umfang verteilt wird, wenn Deckel und Gehäuse zusammengefügt sind. Das gilt auch in den Fällen, in denen etwa zusätzliche Verschraubungen oder Klemm- oder Schnappvorrichtungen für das Zusammenfügen von Deckel und Gehäuse verwendet werden. Eine solche gut verteilte Dichtungskraft ließe sich bei über mehrere Ebenen gestuften Dichtungen sonst nur durch genaueste Toleranzvorgaben und sorgfältigste Montage aufbringen.

Unter dem Begriff "Dichtebene" versteht man eine zwischen den abzudichtenden Teilen, hier Deckel und Gehäuse, angenommene Ebene, in der die wesentlichen Dichtfunktionen durch entsprechende Bauteile bereitgestellt werden. Vorliegend ist die Dichtebene horizontal ausgerichtet.

Vorzugsweise ist die in einer Ebene liegende Dichtungsanordnung dabei über den Umfang der Unterflurkassette umlaufend ausgebildet ist, so das von keiner Seite unerwünschte Medien in die Unterflurkassette eindringen können. Eine solche umlaufende Ausbildung kann dabei z.B. ringförmig, oval oder auch rechteckig/vieleckig ausgeführt sein, je nach Konstruktion der Unterflurkassette.

In einer weiteren Ausbildung der Erfindung sind das starre Trägerelement und das flexible Dichtungselement kraftschlüssig miteinander verbunden, vorzugsweise miteinander verklebt, verschweißt oder auch durch Co-Injektion (Sandwich-Spritzgießen) hergestellt sind. Eine formschlüssige Verbindung ist ebenfalls möglich, jedoch muss dabei darauf geachtet werden, dass bei einer Montage der Formschluss zwischen starrem Trägerelement und flexible Dichtungselement nicht versehentlich gelöst werden kann.

Eine Weiterbildung der Erfindung besteht darin, dass das mit dem Trägerelement verbundene flexibles Dichtungselement verformbare Dichtlippen aufweist, die durch das Verbinden von Deckel und Gehäuse in die Hohlräume einformbar sind. Als Dichtlippen werden üblicherweise vorspringend ausgebildete Teile einer Dichtung bezeichnet, oft mit einem sich gegenüber anderen Dichtungsteilen verjüngend ausgebildeten und dadurch leichter verformbaren Querschnitt, die sich unter Verformung an mindestens eines der abzudichtenden Bauteile anlegen. Solche Dichtlippen stellen eine relativ einfache Konstruktion von Dichtungen bereit, die leicht auf unterschiedliche Abstände und Druckverhältnisse eingestellt werden kann.

In einer weiteren Ausbildung weist das mit dem Trägerelement verbundene flexible Dichtungselement mindestens eine Dichtlippe auf, welche sich ausgehend vom Außenumfang des Trägerelements radial nach außen erstreckt. Insbesondere in einer Ausführung, bei der sich die Dichtlippe bis zur äußeren Gehäusewand der Unterflurkassette erstreckt und durch das Zusammenfügen von Deckel und Gehäuse in Richtung der Oberseite des Trägers gebogen ist, entsteht nach dem Zusammenbau von Deckel und Gehäuse eine selbstverstärkend ausgebildete Dichtung etwa gegen von außen eindringendes Fluid.

Eine Weiterbildung der Erfindung besteht darin, dass das Trägerelement Bereiche unterschiedlicher Dicke aufweist, nämlich Bereiche einer ersten Dicke (d) und einer zweiten Dicke (D) aufweist, wobei die zweite Dicke (D) größer ist als die erste Dicke (d), wobei das Dichtungselement in oder an einem Bereich der ersten Dicke (d) des Trägerelements angeordnet ist und eine über die Bereiche des Trägerelements mit der zweiten Dicke (D) hinausragende, entlang der Kontur des Trägerelements verlaufende flexible Dichtlippe aufweist, und dass das Trägerelement und/oder das Dichtungselement im Bereich der Dichtlippe einen Hohlraum bereitstellen, in welchen die Dichtlippe hineinbiegbar ist. Die Gestaltung des Hohlraums, in welchen die Dichtlippe hineinbiegbar ist, hängt damit nicht nur von der Formgebung des Trägerelements ab, sondern auch von der Form des Dichtungselements als solchem. Durch diese Ausbildung ergeben sich größere konstruktive Freiheiten bei der Anpassung des mehrteiligen Dichtungselements auf die jeweilige Einbausituation in der Unterflurkassette.

Vorteilhafterweise sind die Dichtlippen zu einer Außenseite der Dichtungsanordnung geneigt, von welcher aus ein Eindringen eines Fluides erwartet wird. Damit wirken die Dichtlippen selbstverstärkend in Bezug auf ihre Dichtungsfunktion.

Eine weitere Ausbildung der Erfindung besteht darin, dass das Trägerelement mit seiner Unterseite an mehreren Auflagepunkten oder -flächen des Gehäuses aufliegt. Auch das vereinfacht die Ausbildung der Dichtung zwischen Gehäuse und Deckel, nämlich dadurch, dass je nach den Einbauverhältnissen die Auflage der Dichtungsanordnung variabel gestaltet werden kann.

In einer weiteren vorteilhaften Ausbildung ist das Trägerelement zwischen zwei benachbarten Auflagepunkten oder -flächen parabelförmig, bogenförmig oder ellipsoid in Richtung seiner Oberseite gewölbt. In einer solchen Ausbildung kann nämlich auch zwischen den Auflagepunkten oder -flächen durch die Stabilität des Trägerelements ein ausreichender Anpressdruck für die Dichtung bereitgestellt werden.

Vorteilhaft in diesem Sinne ist auch eine weitere Ausbildung der Dichtungsanordnung, bei der das Trägerelement parallel zur Dichtebene breiter ausgeführt ist, als senkrecht zur Dichtebene. Dadurch wird ein "Ausbiegen" des Trägerelements senkrecht zur seiner Hochachse, also "weg von der Gehäuse- oder Rahmenwand" verhindert.

Eine weitere vorteilhafte Ausbildung besteht darin, dass ein starres Stabilisierungs- oder Lastaufnahmeelement mit dem Trägerelement verbunden ist. Ein solches zusätzliches Stabilisierungs- oder Lastaufnahmeelement verhindert, dass das Trägerelement selbst zu stark durch Druck- oder Schubkräfte belastet wird und dadurch möglicherweise verformt oder in seiner Funktion eingeschränkt werden könnte. Ein Stabilisierungs- oder Lastaufnahmeelement kann beispielsweise im Eckbereich von rechteckigen Unterflurkassetten angeordnet sein, insbesondere dann, wenn weitere flexible Dichtungselemente in einen Eckbereich auskragen, wie etwa unten in einer weiteren Ausführung beschrieben.

In einer Weiterbildung der erfindungsgemäßen Dichtungsanordnung weist das Trägerelement ein Dichtungselement auf, welches eine über die Unterseite des Trägerelements hinausragende, entlang der Kontur des Trägerelements umlaufende, flexible Dichtlippe aufweist. Das erleichtert eine Abdichtung zum Boden des Gehäuses oder zu einem am Boden des Gehäuses vorspringenden Rand, wodurch beispielsweise das Eindringen eines Mediums verhindert wird, welches durch eine Spaltbildung zwischen Deckel und Gehäusewand bis zum Boden des Gehäuses dringt.

In einer weiteren Ausbildung sind ein oder mehrere mit einem Dichtungselement verbundene Dichtstopfen vorgesehen, die vom Dichtungselement auskragen. Solche Dichtstopfen können für die Abdichtung von Stützen oder Bolzen/Führungsbolzen oder zur Dichtung von Durchführungen von Befestigungselementen ausgebildet sein und verhindern damit auch in diesen Bereichen das unerwünschte Eindringen von Medien.

In einer weiteren vorteilhaften Ausbildung sind das Trägerelement und/oder das Stabilisierungs- oder Lastaufnahmeelement aus Polypropylen oder faserverstärktem Kunststoff gefertigt. Insbesondere dann, wenn das zugehörige Dichtungselement aus einem Elastomer besteht, bietet eine solche Kombination Vorteile in Bezug auf ihre Formbarkeit, auf das Verbinden der Bauteile durch Verkleben, Verschweißen, durch Vulkanisation oder durch Co-Injektion und stellt in Bezug auf die unterschiedlichen Werkstoffeigenschaften den gewünschten Unterschied zwischen einem starren Trägerelement und flexiblen Dichtungselement bereit.

Ein weiterer Aspekt der Erfindung betrifft eine Unterflurkassette zur Aufnahme elektrischer oder elektronischer Einbauten oder Leitungen, mit einem kasten- oder topfartigen Gehäuse oder Rahmen, sowie einem mit dem Gehäuse oder mit dem Rahmen verbindbaren Deckel, wobei zwischen Deckel und Gehäuse oder Rahmen eine erfindungsgemäße Dichtungsanordnung vorgesehen ist.

Bei einer Unterflurkassette mit einem rechteckig ausgebildeten Gehäuse und einer umlaufend geschlossenen Dichtungsanordnung zwischen Deckel und Gehäuse besteht eine vorteilhafte Ausbildung darin, dass Trägerelement und flexibles Dichtungselement die Gehäuseecken abgerundet aussparen und in den ausgesparten Ecken Stabilisierungs- oder Lastaufnahmeelemente außerhalb der Dichtungselement vorgesehen sind. Dadurch, dass die Gehäuseecken ausgespart und somit bei der Dichtungsanordnung als solcher abrupte Formübergänge mit rechtwinkligen Ecken vermieden werden, wird eine zu starke punktuelle Belastung der Dichtungselemente verhindert. Durch die zusätzlichen Stabilisierungs- oder Lastaufnahmeelemente außerhalb der Dichtungselemente, also in den ausgesparten Gehäuseecken, vermeidet man darüber hinaus, dass, wie oben bereits gesagt, das Trägerelement selbst oder evtl. weitere Dichtungselemente zu stark durch Druck- oder Schubkräfte belastet werden.

Dieselben Vorteile ergeben sich bei einer Unterflurkassette mit einem runden oder abgerundeten Gehäuse und einer umlaufend geschlossenen Dichtungsanordnung zwischen Deckel und Gehäuse, wenn Stabilisierungs- oder Lastaufnahmeelemente innerhalb der Rundung der Dichtungselemente vorgesehen sind, etwa als Kreissegmente ausgebildet sind.

### KURZE BESCHREIBUNG DER ZEICHNUNG

Im folgenden Abschnitt wird die Erfindung mit Bezugnahme auf das in der Zeichnung gezeigte Ausführungsbeispiel näher erläutert. In der Zeichnung zeigt
- Fig. 1: die Gehäuse von Unterflurkassetten ohne Deckel,
- Fig. 2: die Gehäuse von Unterflurkassetten mit jeweils aufgelegten Deckeln,
- Fig. 3: eine Darstellung des Gehäuses einer Unterflurkassette ohne Deckel und ohne Elektroinstallationen,
- Fig. 4: eine Dichtungsanordnung im Querschnitt und vor einer Montage in eine Unterflurkassette,
- Fig. 5: die Dichtungsanordnung gemäß Fig. 3 nach der Montage in eine Unterflurkassette,
- Fig. 6: eine andere Dichtungsanordnung im Querschnitt und vor einer Montage in eine Unterflurkassette,
- Fig. 7: die Dichtungsanordnung gemäß Fig. 6 nach der Montage in eine Unterflurkassette,
- Fig. 8: eine Aufsicht auf einen Eckbereich einer Unterflurkassette,
- Fig. 9: eine vollständige Aufsicht auf eine rechteckige Unterflurkassette ohne aufgesetzten Deckel,
- Fig. 10: einen Abschnitt einer rund ausgebildeten Unterflurkassette in einer Aufsicht.

Gleiche oder ähnliche Elemente können in den Figuren mit denselben Bezugszeichen referenziert sein.

### BESCHREIBUNG VON AUSFÜHRUNGSBEISPIELEN

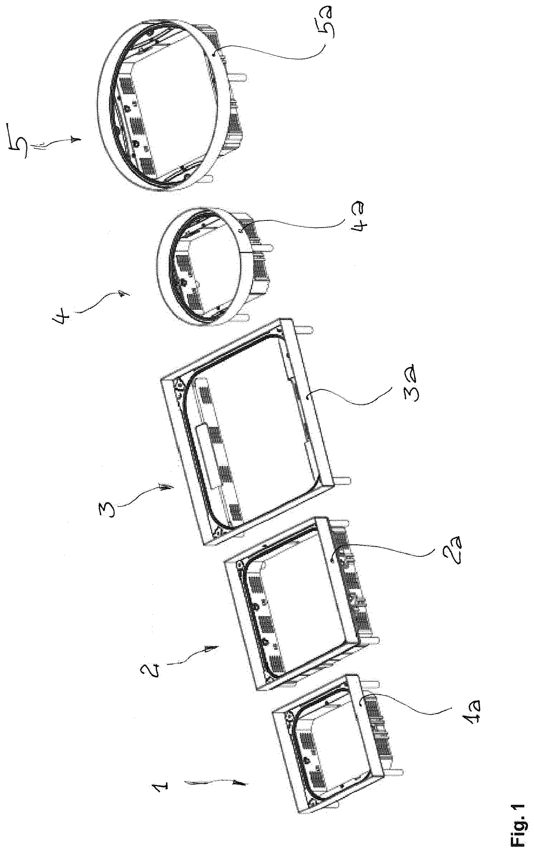

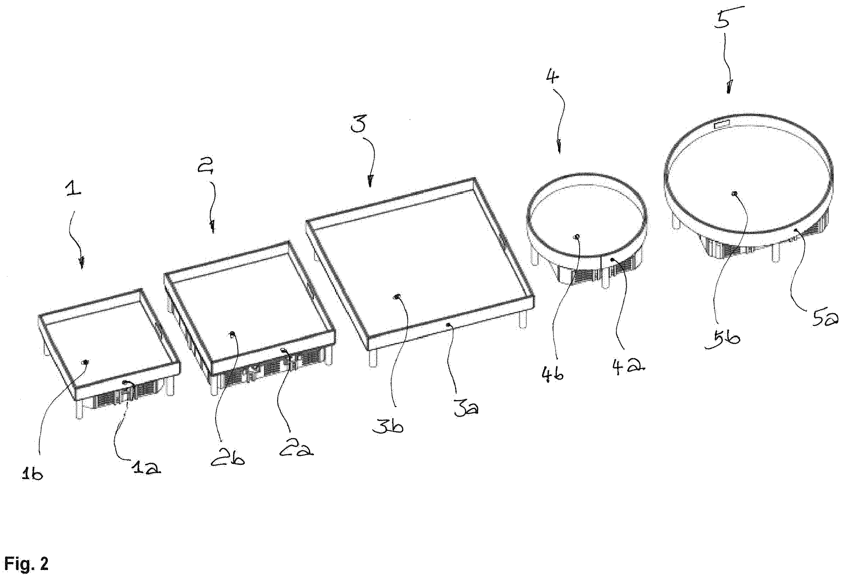

Fig. 1 und 2 zeigen verschiedene Beispiele von Unterflurkassetten, nämlich drei quadratische Unterflurkassetten 1 bis 3 unterschiedlicher Abmessungen sowie zwei runde Unterflurkassetten 4 und 5 ebenfalls unterschiedlicher Abmessungen.

In Fig. 1 sind allein die Gehäuse 1a, 2a, 3a sowie 4a und 5a der Unterflurkassetten 1 bis 5 ohne Deckel dargestellt, während man in Fig. 2 dieselben Gehäuse mit jeweils aufgelegten Deckeln 1b bis 5b erkennen kann. Die Deckel passen genau in die Gehäuse und passen sich beim Zusammenfügen mit einem umlaufend hochstehenden Rand in die Gehäusewandung ein.

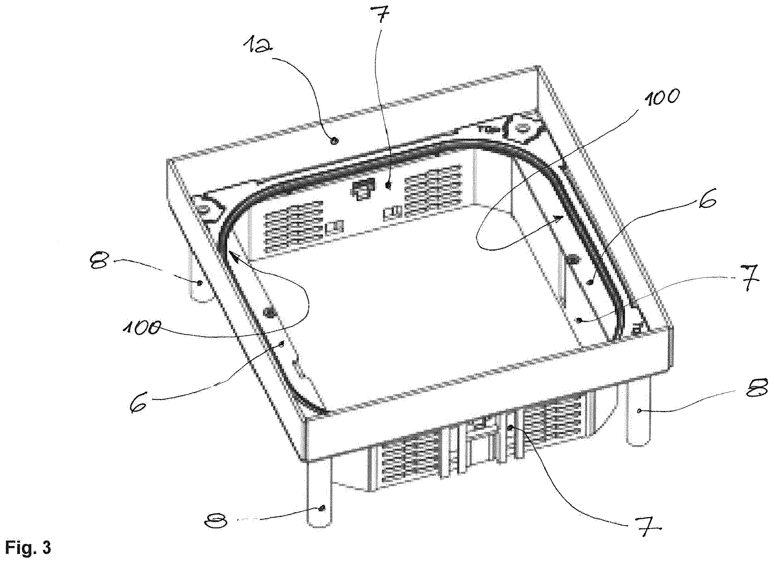

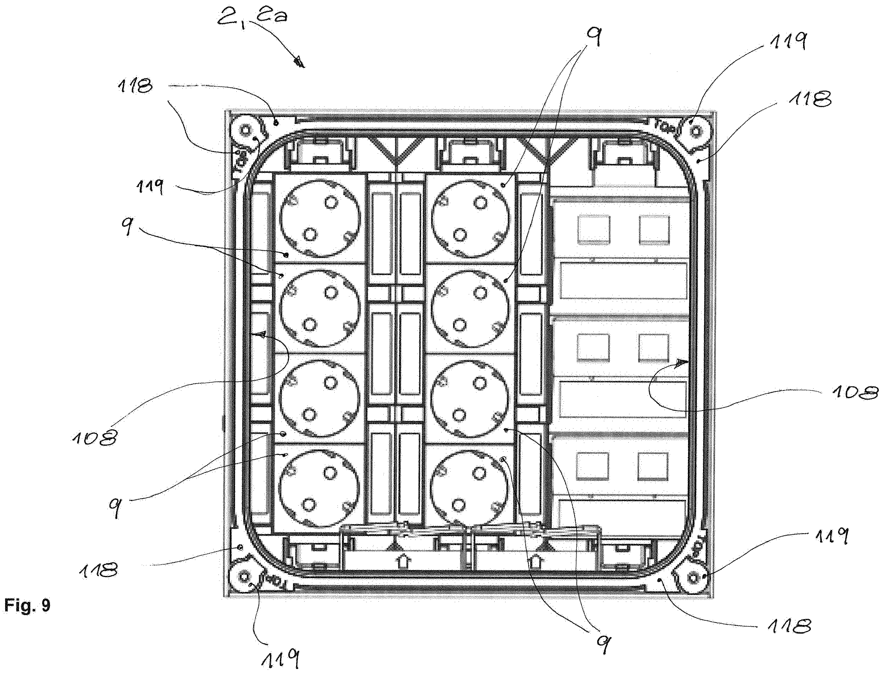

Fig. 3 zeigt eine Darstellung des Gehäuses 1a der Unterflurkassette 1 ohne Deckel und ohne Elektroinstallationen. Hier erkennt man auch die Position der umlaufend ausgebildeten Dichtungsanordnung 100, die auf im Wesentlichen nach innen vorspringenden horizontalen Flächen 6 des Gehäuses 1a aufliegt. Das Gehäuse 1a weist, wie im Übrigen alle in Fig. 1 und 2 gezeigten anderen Gehäuse auch, in seinem unteren Teil im wesentlichen senkrechte Begrenzungswände 7 sowie zylindrische oder rohrförmige Stützen 8 auf, mit denen das jeweilige Gehäuse auf einer tragenden Fläche, hier einem nicht näher dargestellten Betonboden steht. Innerhalb der Begrenzungswände 7 sind nach vollständiger Installation einer elektrischen Anlage entsprechende Verteiler- und Steckdosenanordnungen 9 angeordnet, wie aus einer Zusammenschau mit Figur 9 ersichtlich ist, die eine Aufsicht auf eine rechteckige Unterflurkassette mit Elektroinstallationen zeigt.

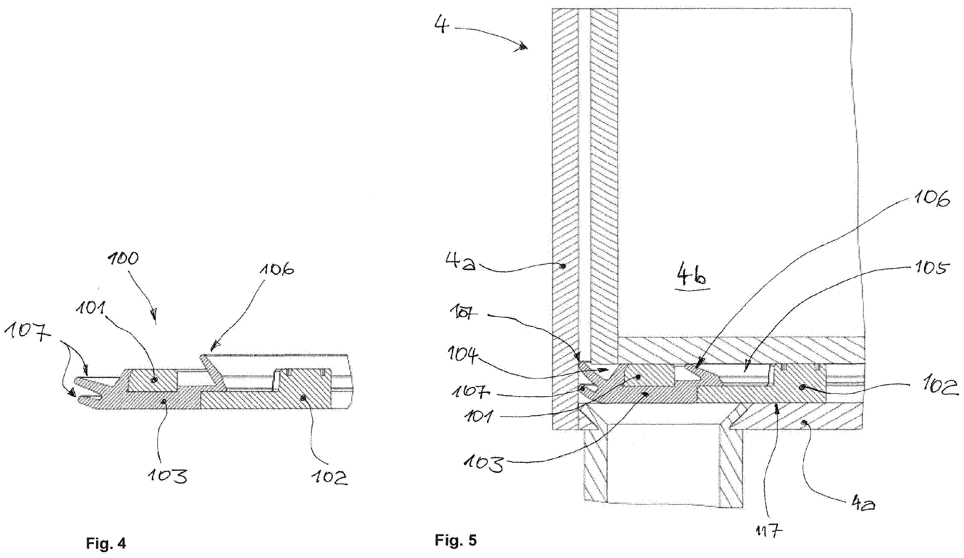

Fig. 4 zeigt eine Dichtungsanordnung 100 im Querschnitt und in vergrößerter Darstellung vor einer Montage in eine Unterflurkassette. Die Dichtungsanordnung 100 ist für die Montage in eine runde Unterflurkassette vorgesehen, hier zur Montage in die Unterflurkassette 4 gemäß Fig. 1.

Fig. 5 zeigt, ebenfalls im Querschnitt, die Dichtungsanordnung 100 nach der Montage in die Unterflurkassette 4, d.h. nach dem Zusammenfügen von rundem, topfartigen Gehäuses 4a der Unterflurkassette 4 mit deren Deckel 4b sowie mit zwischen Deckel und Gehäuse eingesetzter Dichtungsanordnung. Deckel 4b und Gehäuse 4a begrenzen und umschließen so die Dichtungsanordnung 100.

In der Zusammenschau der Fig. 4 und 5 erkennt man nun deutlich, dass die Dichtungsanordnung 100 mehrteilig ausgebildet ist und zwei an Deckel 4b und Gehäuse 4a anliegende starre Trägerelemente 101 und 102 sowie ein mit dem Trägerelementen verbundenes flexibles Dichtungselement 103 aufweist, wobei die starren Trägerelemente 101 und 102 so ausgebildet sind, dass bei aufliegendem Deckel 4b im Zusammenwirken von Trägerelementen 101 und 102, Deckel 4b und Gehäuse 4a sich Hohlräume 104 und 105 zur Aufnahme des flexiblen Dichtungselements 103 ausbilden. Mindestens Teile des flexiblen Dichtungselements 103, nämlich hier die Dichtlippen 106 und 107 sind dabei durch die Auflage des Deckels 4b auf dem Gehäuse 4a in die Hohlräume 104, 105 einpressbar bzw. einformbar.

In der Zusammenschau mit der Fig.3 erkennt man auch, dass die starren Trägerelemente 101 und 102 der Dichtungsanordnung 100 in einer Ebene zwischen Deckel und Gehäuse liegen, d.h. in der Dichtebene, und dass sie Dichtungsanordnung und damit die Trägerelemente eine umlaufend geschlossene Form aufweisen, nämlich über den Umfang der Unterflurkassette 4 umlaufend ausgebildet sind.

Die Trägerelemente 101, 102 sind in dieser Ausführung aus faserverstärktem Kunststoff gefertigt sind, wobei das Dichtungselement 103 aus einem Elastomer besteht.

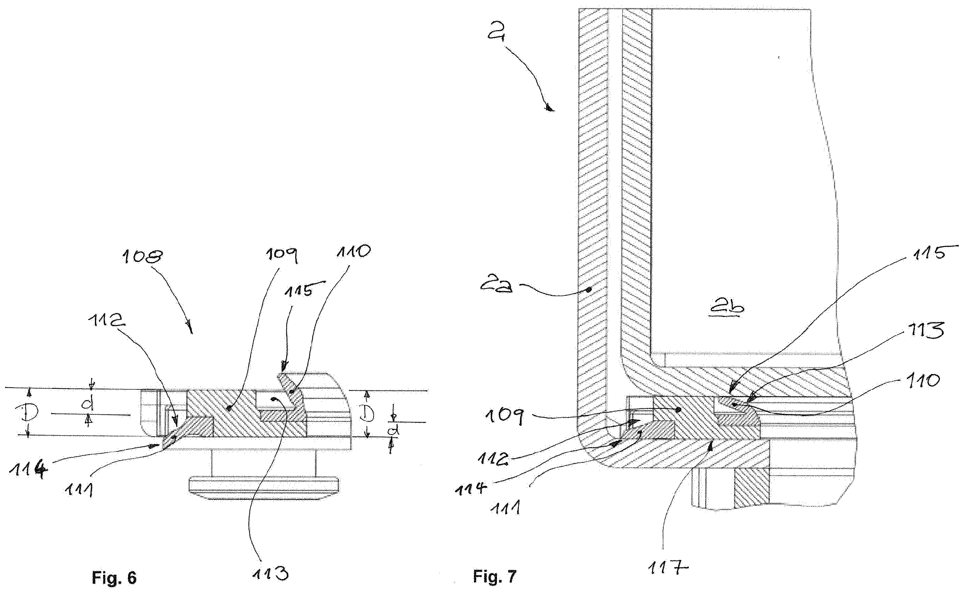

Fig. 6 zeigt eine weitere Ausführung einer Dichtungsanordnung 108 im Querschnitt und in vergrößerter Darstellung vor einer Montage in eine Unterflurkassette. Die Dichtungsanordnung 108 ist für die Montage in eine rechteckige Unterflurkassette vorgesehen, hier zur Montage in die Unterflurkassette 2 gemäß Fig. 1.

Fig. 7 zeigt im Querschnitt die Dichtungsanordnung 108 nach der Montage in die Unterflurkassette 2, d.h. nach dem Zusammenfügen des eckigen, topfartigen Gehäuses 2a der Unterflurkassette 2 mit deren Deckel 2b sowie mit zwischen Deckel und Gehäuse eingesetzter Dichtungsanordnung. Deckel 2b und Gehäuse 2a begrenzen und umschließen so die Dichtungsanordnung 108. Die Schnittebene liegt hier etwa in der Mitte einer der Seiten der Unterflurkassette 2.

In der Zusammenschau der Fig. 6 und 7 erkennt man, dass hier die Dichtungsanordnung 108 mehrteilig ausgebildet ist, jedoch lediglich ein an Deckel 2b und Gehäuse 2a anliegendes starres Trägerelemente 109 sowie zwei mit dem Trägerelement 109 verbundene flexible Dichtungselemente 110 und 111 aufweist. Das starre Trägerelement 109 ist so ausgebildet, dass bei auf dem Gehäuse 2a aufliegendem Deckel 2b im Zusammenwirken von Trägerelement 109, Deckel 2b und Gehäuse 2a sich Hohlräume 112 und 113 zur Aufnahme der flexiblen Dichtungselemente 110 und 111 ausbilden. Mindestens Teile der flexiblen Dichtungselemente 110, 111, hier die Dichtlippen 114 und 115 sind dabei durch die Auflage des Deckels 2b auf dem Gehäuse 2a in die Hohlräume 112, 113 einpressbar bzw. einformbar.

In dieser Ausführung weist das Trägerelement 109 Bereiche einer ersten Dicke (d) und einer zweiten Dicke (D) auf, wobei die zweite Dicke (D) größer ist als die erste Dicke (d). Die Dichtungselemente 110 und 111 sind dabei in oder an einem Bereich der ersten Dicke (d) des Trägerelements 109 angeordnet und weisen jeweils eine über die Bereiche des Trägerelements mit der zweiten Dicke (D) hinausragende, entlang der Kontur des Trägerelements verlaufende flexible Dichtlippe 114, 115 auf. Somit stellt das Trägerelement 109 innenseitig im Zusammenwirken mit dem Dichtungselement 110 und dem Deckel 2b im Bereich der Dichtlippe 115 einen Hohlraum 113 bereit, in welchen die Dichtlippe 115 hineinbiegbar ist. Außenseitig stellt das Trägerelement 109 im Zusammenwirken mit dem unteren Teil des Gehäuses 2a im Bereich der Dichtlippe 114 einen Hohlraum 112 bereit, in welchen die Dichtlippe 114 hineinbiegbar ist.

Bei dieser Dichtungsanordnung 108 weist damit das Trägerelement 109 ein Dichtungselement 111 auf, welches als eine über die Unterseite des Trägerelements 109 hinausragende, entlang der Kontur des Trägerelements umlaufende, flexible Dichtlippe 114 ausgebildet ist.

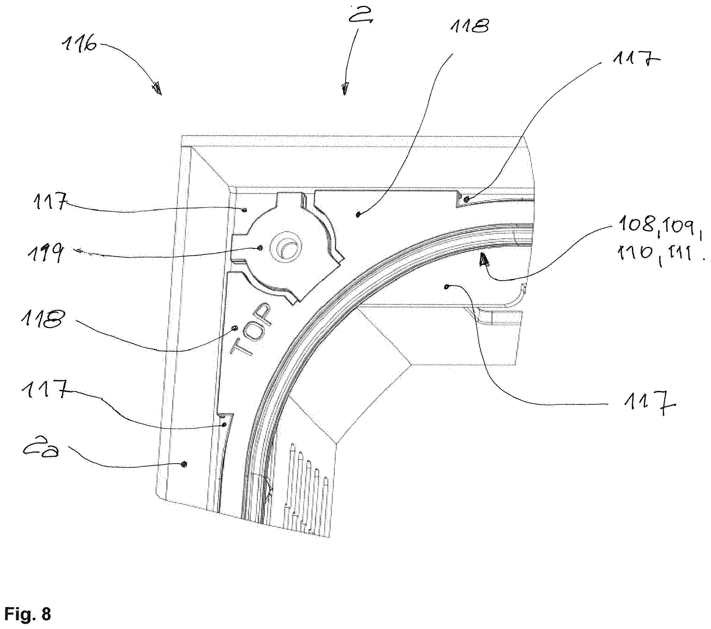

Fig. 8 zeigt eine Aufsicht auf einen Eckbereich 116 einer Unterflurkassette 2 mit einem mit einem rechteckigen Gehäuse 2a ohne aufgesetzten Deckel. Erkennbar ist eine umlaufend geschlossenen Dichtungsanordnung 108, die auf einer flachen, horizontal vorspringenden Anlagefläche 117 des Gehäuses 2a aufgelegt ist.

Das Trägerelement 109 und die flexiblen Dichtungselemente 110 und 111, wie sie besser in der Fig. 6 und 7 erkennbar sind, sparen die Gehäuseecken 116 abgerundet aus. Dafür sind zur Lastaufnahme im ausgesparten Eckbereich Stabilisierungs- oder Lastaufnahmeelemente 118 außerhalb der Dichtungselemente 110, 111 vorgesehen, die hier mit dem Trägerelement verbunden sind.

Bei der hier gezeigte Dichtungsanordnung 108 sind mehrere mit einem Dichtungselement 110, 111 verbundene Dichtstopfen 119 vorgesehen, die vom Dichtungselement 110,111 auskragen und dazu dienen, Öffnungen in den Ecken des Gehäuses abzudichten, bspw. Öffnungen zur Positionierung und Fixierung der Dichtungsanordnung in dem Gehäuse, und/oder ggf. zylindrische Stützkörper oder Bolzen aufzunehmen und an der Anlagefläche abzudichten. Diese Konstruktion ist auch in Fig.9 erkennbar.

Fig. 9 zeigt eine Aufsicht auf die gesamte rechteckige Unterflurkassette 2 ohne aufgesetzten Deckel 2b. Deutlich erkennbar sind auch hier die umlaufende Dichtungsanordnung 108 sowie Teile der elektrischen Installation einer elektrischen Anlage, nämlich Verteiler- und Steckdosenanordnungen 9.

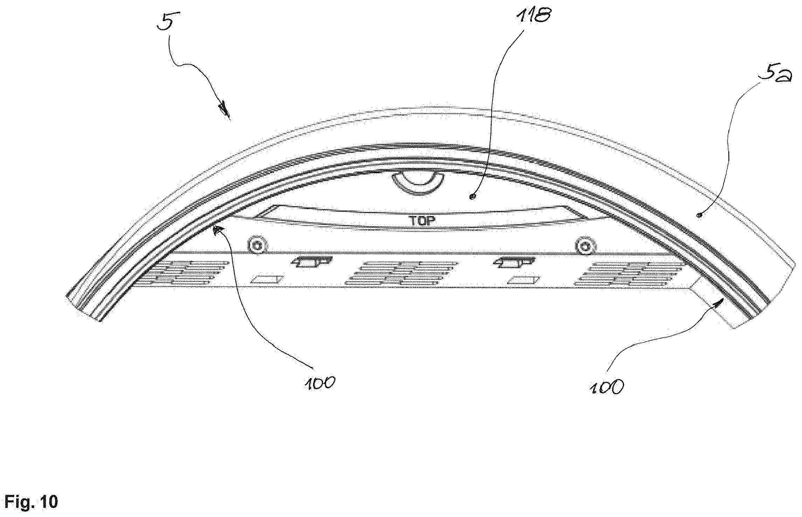

Fig. 10 zeigt abschließend einen Abschnitt einer rund ausgebildeten Unterflurkassette 5 in einer Aufsicht, ausgebildet mit einer in einem Gehäuse 5a eingesetzten umlaufend geschlossenen Dichtungsanordnung 100, wobei Stabilisierungs- oder Lastaufnahmeelemente 118 innerhalb der Rundung der Dichtungselemente vorgesehen sind.

### LISTE DER BEZUGSZEICHEN (Teil der Beschreibung)

| | | | |
|---|---|---|---|
| 1 - 3 | quadratische Unterflurkassette | 103 | flexibles Dichtungselement |
| 4, 5 | runde Unterflurkassette | 104, 105 | Hohlraum |
| 1a-5a | kasten- oder topfartiges Gehäuse | 106, 107 | Dichtlippe |
| | | 108 | Dichtungsanordnung |
| 1b-5b | Deckel | 109 | starres Trägerelement |
| 6 | horizontale Fläche | 110, 111 | flexibles |
| 7 | senkrechte Begrenzungswand | 112, 113 | Dichtungselement Hohlraum |
| 8 | rohrförmige Stütze | 114, 115 | Dichtlippe |
| 9 | Verteiler- und Steckdosenanordnung | 116 | Eckbereich einer Unterflurkassette |
| | | 117 | horizontal vorspringende Anlagefläche |
| 100 | Dichtungsanordnung | | |
| 101, 102 | starres Trägerelement | 118 | Lastaufnahmeelement |
| | | 119 | Dichtstopfen |

## Patentansprüche

1. Dichtungsanordnung (100,108) einer Unterflurkassette (1-5), vorzugsweise einer Unterflurkassette für die Aufnahme elektrischer oder elektronischer Einbauten oder Leitungen, wobei die Dichtungsanordnung zwischen einem Deckel (1b-5b) und einem kasten- oder topfartigen Gehäuse (1a-5a) der Unterflurkassette vorgesehen ist und nach Zusammenfügen von Deckel und Gehäuse an beiden abdichtend anliegt, **dadurch gekennzeichnet, dass** die Dichtungsanordnung (100, 108) mehrteilig ausgebildet ist und mindestens ein an Deckel (1b-5b) und/oder Gehäuse (1a-5a) anliegendes starres Trägerelement (101,102,109) sowie mindestens ein mit dem Trägerelement verbundenes flexibles Dichtungselement (103,110,111) aufweist, wobei das mindestens eine starre Trägerelement (101,102,109) so ausgebildet ist, dass sich bei aufliegendem Deckel (1b-5b) im Zusammenwirken von Trägerelement (101,102,109), Deckel (1b-5b)) und Gehäuse (1a-5a) Hohlräume (104, 105, 112, 113) zur Aufnahme des flexiblen Dichtungselements (103,110,111) ausbilden und mindestens Teile (106, 107,114,115) des flexiblen Dichtungselements (103,110,111) durch die Auflage des Deckels (1b-5b) auf der Dichtungsanordnung (100,108) in die Hohlräume (104,105,112,113) einpressbar oder einformbar sind.

2. Dichtungsanordnung (100,108) nach Anspruch 1, wobei mindestens ein starres Trägerelement (101,102,109) in einer Ebene zwischen Deckel (1b-5b) und Gehäuse (1a-5a) liegt und eine umlaufend geschlossene Form aufweist, vorzugsweise über den Umfang der Unterflurkassette (1-5) umlaufend ausgebildet ist.

3. Dichtungsanordnung (100, 108) nach Anspruch 1 oder 2, wobei das starre Trägerelement (101,102,109) und das flexible Dichtungselement (103,110,111) kraftschlüssig miteinander verbunden sind, vorzugsweise miteinander verklebt, verschweißt oder durch Co-Injektion hergestellt sind.

4. Dichtungsanordnung (100,108) nach einem der Ansprüche 1 bis 3, bei der das mit dem Trägerelement (101,102,109) verbundene flexible Dichtungselement (103,110,111) verformbare Dichtlippen (106,107,114,115) aufweist, die durch das Zusammenfügen von Deckel (1b-5b) und Gehäuse (1a-5a) in die Hohlräume (104,105,112,113) einformbar sind.

5. Dichtungsanordnung (100,108) nach einem der Ansprüche 1 bis 4, bei der das mit einem Trägerelement (101,109) verbundene flexible Dichtungselement (103,111) mindestens eine Dichtlippe (107,114) aufweist, welche sich ausgehend vom Außenumfang des Trägerelements (101,109) radial nach außen erstreckt.

6. Dichtungsanordnung (100) nach Anspruch 5, bei der die Dichtlippe (107) sich bis zur Gehäusewand erstreckt und durch das Zusammenfügen von Deckel (4b) und Gehäuse (4a) in Richtung der Oberseite des Trägerelements (101) gebogen ist.

7. Dichtungsanordnung (108) nach einem der Ansprüche 1 bis 6, bei der das Trägerelement (109) Bereiche einer ersten Dicke (d) und einer zweiten Dicke (D) aufweist, wobei die zweite Dicke (D) größer ist als die erste Dicke (d), wobei das Dichtungselement (110,111) in oder an einem Bereich der ersten Dicke (d) des Trägerelements (109) angeordnet ist und eine über die Bereiche des Trägerelements (109) mit der zweiten Dicke (D) hinausragende, entlang der Kontur des Trägerelements verlaufende flexible Dichtlippe (114,115) aufweist, und dass das Trägerelement (109) und/oder das Dichtungselement (110,111) im Bereich der Dichtlippe (114,115) einen Hohlraum (112,113) bereitstellen, in welchen die Dichtlippe (114,115) hineinbiegbar ist.

8. Dichtungsanordnung (100,108) nach einem der Ansprüche 4 bis 7, bei der die Dichtlippen (106,107,114) zu einer Außenseite der Dichtungsanordnung (100,108) geneigt sind, von welcher aus ein Eindringen eines Fluides erwartet wird.

9. Dichtungsanordnung (100,108) nach einem der Ansprüche 1 bis 8, bei der das Trägerelement (101,102,109) mit seiner Unterseite an mehreren Auflagepunkten oder -flächen (117) des Gehäuses (1a-5a) aufliegt

10. Dichtungsanordnung (100,108) nach Anspruch 9, bei der das Trägerelement (101,102,109) zwischen zwei benachbarten Auflagepunkten oder - flächen (6, 117) parabel-, bogenförmig oder ellipsoid in Richtung seiner Oberseite gewölbt ist.

11. Dichtungsanordnung (100,108) nach einem der Ansprüche 1 bis 10, bei der das Trägerelement (101,102,109) parallel zur Dichtebene breiter ausgeführt ist als senkrecht zur Dichtebene.

12. Dichtungsanordnung (100,108) nach einem der Ansprüche 1 bis 11, bei der mindestens ein starres Stabilisierungs- oder Lastaufnahmeelement (118) mit dem Trägerelement (102,109) verbunden ist.

13. Dichtungsanordnung (108) nach einem der Ansprüche 4 bis 12, bei der das Trägerelement (109) ein Dichtungselement (111) aufweist, welches eine über die Unterseite des Trägerelements (109) hinausragende, entlang der Kontur des Trägerelements umlaufende, flexible Dichtlippe (114) aufweist.

14. Dichtungsanordnung (108) nach einem der Ansprüche 1 bis 13, bei der ein oder mehrere mit einem Dichtungselement verbundene Dichtstopfen (119) vorgesehen sind, die vom Dichtungselement (110,111) auskragen.

15. Unterflurkassette (1-5) zur Aufnahme elektrischer oder elektronischer Einbauten oder Leitungen, mit einem kasten- oder topfartigen Gehäuse (1a-5a) sowie einem mit dem Gehäuse verbindbaren Deckel (1b-5b), wobei zwischen Deckel und Gehäuse eine Dichtungsanordnung (100,108) nach einem der Ansprüche 1 bis 14 vorgesehen ist.
